# EUROPEAN PATENT SPECIFICATION

(11) **EP 1 812 733 B1**
(45) Date of publication and mention of the grant of the patent: **14.03.2012**
(21) Application number: 05797180.6
(22) Date of filing: 21.10.2005
(51) Int. Cl.: F01L 1/02, F16F 15/10, F16H 7/06, F16H 55/30

(54) **SPROCKET WITH 1.5 ORDER, AND MULTIPLES THEREOF, VIBRATION CANCELING PROFILE AND SYNCHRONOUS DRIVE EMPLOYING SUCH A SPROCKET**
KETTENRAD MIT UNTERDRÜCKUNGSPROFIL FÜR VIBRATIONEN 1,5TER ORDNUNG UND VIELFACHEN DAVON SOWIE SOLCH EIN KETTENRAD EINSETZENDER SYNCHRONANTRIEB
PIGNON A ORDRE 1,5 ET A MULTIPLES DE CELUI-CI, PROFIL D'ELIMINATION DES VIBRATIONS ET ENTRAINEMENT SYNCHRONE UTILISANT CE PIGNON

(30) Priority: 22.10.2004 US 621508 P
(43) Date of publication of application: 01.08.2007
(73) Proprietor: Litens Automotive Partnership, Woodbridge, Ontario L4L 5T9 (CA)
(72) Inventor: GAJEWSKI, Witold, Richmond Hill, Ontario L4S 1A8 (CA)
(74) Representative: Grünecker, Kinkeldey, Stockmair & Schwanhäusser
(86) International application number: PCT/CA2005/001615
(87) International publication number: WO 2006/042412

(56) References cited:
- WO-A1-03/046413
- WO-A1-2005/026583
- CA-A1- 2 463 715
- CA-A1- 2 480 440
- DE-A1- 19 520 508
- US-A- 5 882 025
- US-A1- 2003 104 886

## Description

### FIELD OF THE INVENTION

The present invention relates to a having the features cited in the preamble of the claim 1.

### BACKGROUND OF THE INVENTION

Synchronous drive systems are widely used and perhaps most commonly are used in internal combustion engines to drive cam shafts, jackshafts and the like in a synchronous manner with the crankshaft of the engine.

While such synchronous drives are widely employed, they do suffer from disadvantages. In particular, firing of cylinders in the engine and the operation of the devices operated by the cam shafts, etc. driven by the synchronous drive, leads to a type of undesired mechanical vibration known as torsional vibration. Torsional vibration can lead to timing errors and high levels of mechanical noise. In addition to undesired vibration and noise, torsional vibration also leads to fluctuations in the tension of spans of the chain or belt in the synchronous drive which can result in increased wear and decreased life of the chain or belt of the synchronous drive.

When the frequency of the torsional vibrations is close to a natural frequency of the synchronous drive, system resonance will occur and the torsional vibration will be at a maximum.

Solutions to the problems of torsional vibration have previous been proposed. Specifically, published PCT Application WO03046413, to the inventor of the present invention and assigned to the assignee of the present invention, teaches a synchronous drive having the features cited in the preamble of claim 1, with non-circular sprockets for chains or belts wherein the sprockets or rotors are shaped such that resonance in the synchronous drive is reduced.

PCT application WO 03046413 addresses the problem of resonances of some orders of the natural frequencies in synchronized drives and suggests to provide a non-circular profile of a driven rotor which addresses the periodic fluctuating load torque produced by a rotary load assembly, like a valve train of a cam shaft, which is experienced by a second driven rotor, e.g. a cam shaft rotor. The angular position of the protruding and receding portions of the non-circular profile relative to an angular position of a fluctuating load torque present on the second rotor, and the magnitude of the eccentricity of the non-circular profile, are such that the non-circular profile applies to the second rotor an opposing fluctuating corrective torque which reduces or substantially cancels the fluctuating load torque of the rotary load assembly. This principle has proven to be effective for reducing vibration problems of synchronous drive systems of internal combustion engines and can be applied to practically every internal combustion engine by adapting the parameters of said non-circular profile.

It is an object of the present invention to provide a synchronous drive apparatus of the above mentioned type for applying the above mentioned principle to specific engines, in particular a V6 engine.

This object is solved with a synchronous drive having the features cited in claim 1.

Advantageous features and embodiments are cited in the dependent claims.

### SUMMARY OF THE INVENTION

According to an aspect of the present invention, there is provided a synchronous drive having at least two rotating elements connected by an endless drive structure and wherein one of the at least two elements rotates at one half the speed of another of the at least two rotating elements, the drive comprising: an endless drive structure; a rotor connected to the one element of the at least one rotating elements which rotates at one half speed, the rotor operable to engage the endless drive structure to rotate the one element, the rotor having a three-lobed non-circular radial profile which engages the interconnecting means; a rotor connected to another of the at least two rotating elements and being operable to engage the interconnecting means to rotate the connected element, wherein the three-lobed non-circular radial profile of the rotor connected to the one element is selected to produce a corrective torque in the endless drive structure of the synchronous drive to reduce 1.5 order vibrations in the synchronous drive.

Preferably, if more than one element rotates at one half the speed of another element in the drive, then the rotor for each one half speed rotating element has a three-lobed non-circular radial profile to reduce 1.5 order vibrations in the synchronous drive.

Also preferably, the three-lobed non-circular profile of the rotor is overlaid with a further second profile having six lobes to form a composite non-circular profile for the rotor, the composite profile being selected to produce corrective torques in the endless drive structure of the synchronous drive to reduce 1.5 order and 3^{rd} vibrations in the synchronous drive.

The present invention provides a vibration canceling rotor and a synchronous drive employing such rotors wherein 1.5 order vibrations in the synchronous drive can be reduced by employing the vibration canceling rotor on a rotating member of the synchronous drive that rotates at one half the speed of another rotating member of the drive. To cancel 1.5 order vibrations, the rotor has a three-lobed non-circular radial profile to engage the endless drive structure of the synchronous drive. To cancel 1.5 order and 3^{rd} order vibrations, the rotor has a composite six lobed non-circular radial profile to engage the endless drive structure. The endless drive structure can be a chain or a toothed belt.

### BRIEF DESCRIPTION OF THE DRAWINGS

Preferred embodiments of the present invention will now be described, by way of example only, with reference to the attached Figures, wherein:
Figure 1 shows a single chain synchronous drive for a V6 Engine;
Figure 2 shows a dual chain synchronous drive for a V6 Engine;
Figure 3 shows a Fourier Waterfall graph of the torsional vibrations measured at a camshaft of a typical prior art synchronous drive of a V6 engine;
Figure 4 shows the profile of the teeth of a rotor in accordance with the present invention overlaid on the profile of the teeth a conventional socket;
Figure 5 shows the outline of the profiles of the rotors of Figure 4 and indicators of the mid points of their respective teeth;
Figure 6 shows the profile of the teeth of a rotor, in accordance with the present invention with two non-circular profiles overlaid on the profile of the teeth a conventional socket; and
Figure 7 shows a Fourier Waterfall graph of the torsional vibrations measured at a camshaft of the V6 engine of Figure 3 when the camshaft rotors have been replaced with the rotor of Figure 6.

### DETAILED DESCRIPTION OF THE INVENTION

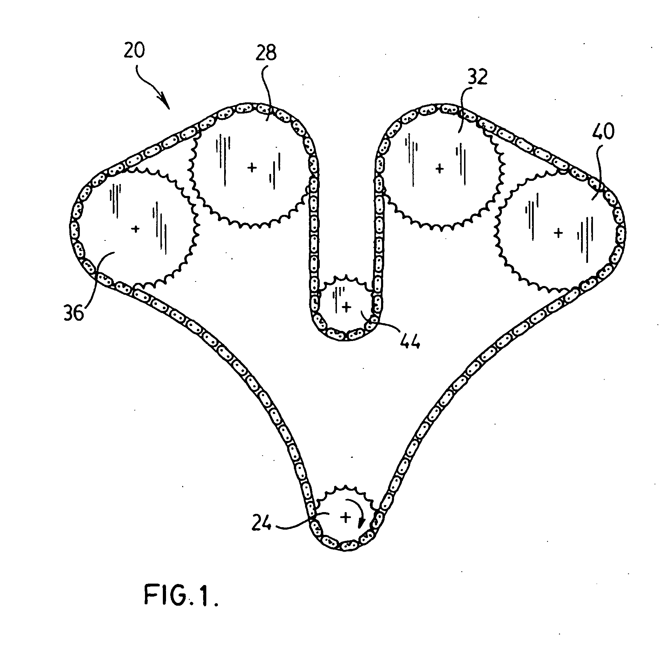

A synchronous drive, in accordance with an embodiment of the present invention, is indicated generally at 20 in Figure 1. Drive 20 includes a driving rotor 24, which is mounted to the crankshaft of an internal combustion engine, a pair of inlet camshaft rotors 28 and 32, a pair of exhaust cam shaft rotors 36 and 40 and an idler shaft rotor 44, all of which are interconnected by roller chain 48.

While, in the embodiment of Figure 1, synchronous drive 20 employs a roller chain 48 to interconnect the rotors, it will be apparent to those of skill in the art that endless drive 20 could instead employ a toothed belt or any other suitable means of interconnecting the rotors, provided only that the rotors are appropriately formed to engage the continuous-loop elongate drive structure. Accordingly, as used herein, the term "sprocket" or "rotor" is intended to encompass both sprockets or rotors for chain drives and sprockets or rotors for toothed belt drives. Further, in the following discussion the term "tooth" is intended to encompass both the drive engaging elements of rotors for chain drives and the tooth engaging structures on rotors for toothed belts.

Figure 1 is intended merely to be an illustrative example of a synchronous drive in accordance with the present invention. As will be apparent to those of skill in the art, a variety of other configurations of synchronous drives susceptible to non-integer orders of resonance are possible and can be addressed by the present invention.

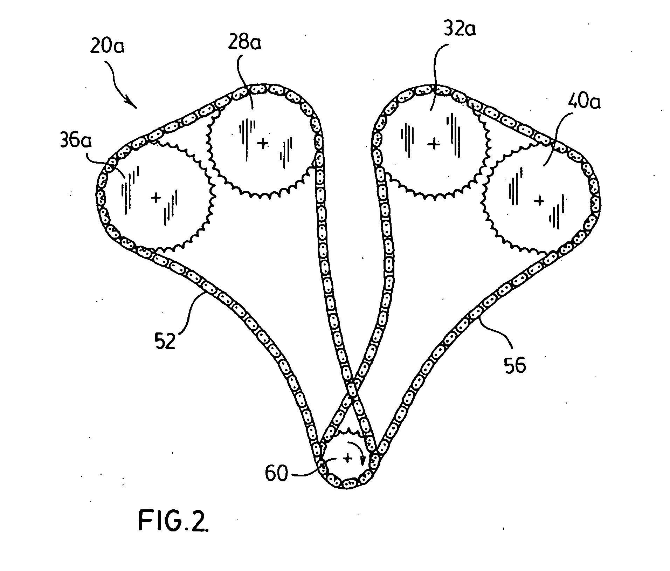

For example, while Figure 1 shows one configuration of a synchronous drive for a V6 engine employing a single chain, Figure 2 shows another configuration of a V6 synchronous drive wherein two roller chains are employed. In Figure 2 components which are similar to those of Figure 1 are identified with the same reference numerals with an "a" appended.

In Figure 2, drive 20a includes two chains 52 and 56, each of which drives the camshaft rotors on a respective bank of the V6 engine and no idler rotor is required. Specifically, chain 52 drives inlet camshaft rotor 28a and exhaust camshaft rotor 36a while chain 56 drives inlet camshaft rotor 32a and exhaust camshaft rotor 40a. Each of chains 52 and 56 are driven by a respective set of teeth on a driven double-rotor 60, which is mounted on the crankshaft of the engine. Many other configurations of synchronous drive are possible, including staged drives, etc. and 1.5 order resonance, and its integer multiples, in such configurations can also be addressed by the present invention.

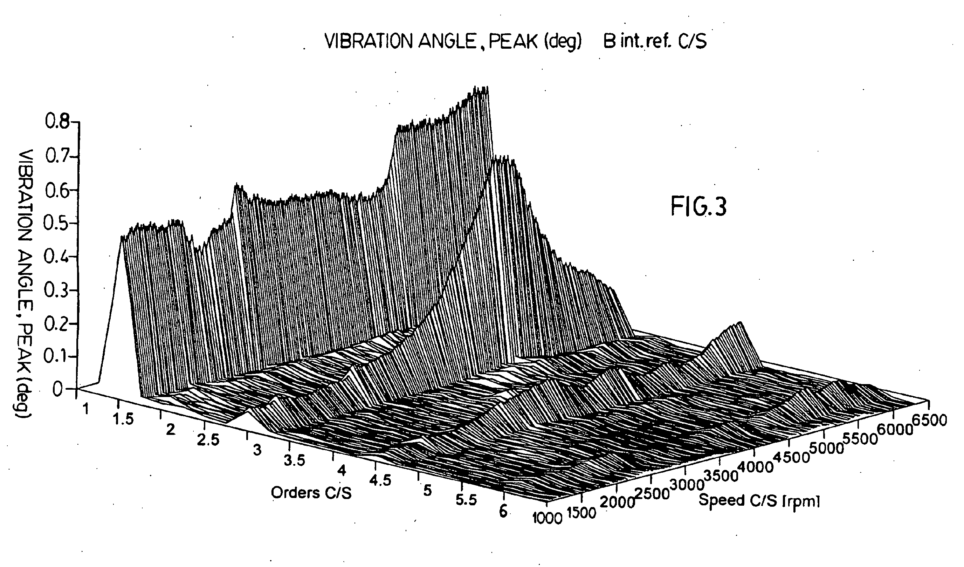

Figure 3 shows a Fourier Waterfall graph of the torsional vibrations measured at a camshaft of a typical prior art synchronous drive of a V6 engine. The high levels of torsional vibration experienced at the 1.5 crankshaft order and, to a lesser extent, the 3^{rd} order resonance points is apparent (in this Figure "Speed" refers to the crankshaft speed).

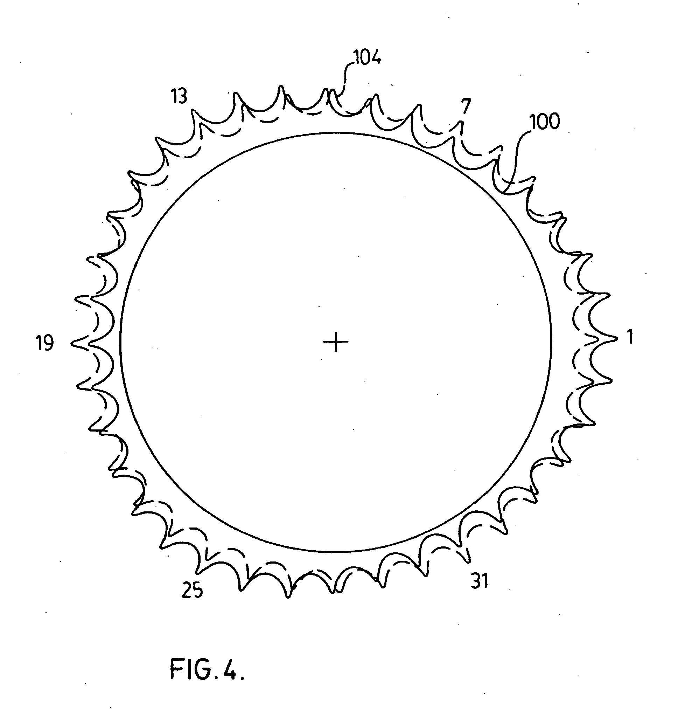

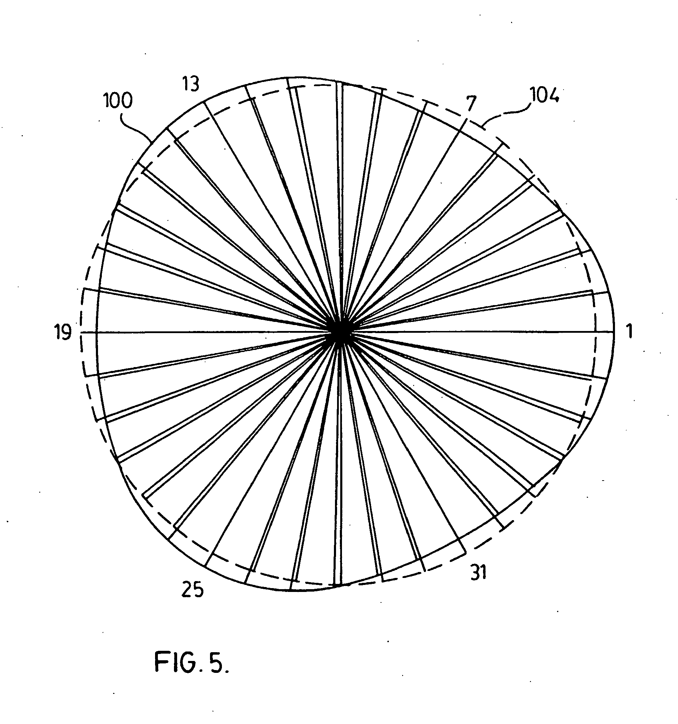

Figure 4 shows the non-circular radial profile of the teeth of a thirty-six tooth rotor 100, shown in solid line, constructed in accordance with the present invention. In the Figure, the inventive driven rotor 100 is overlaid on the circular radial profile of the teeth of a conventional thirty-six tooth rotor 104, shown in dashed line. Figure 5 shows the radial profile outline of the two rotors of Figure 4, with radial lines showing the relative positions of the mid points of the rotor teeth for each rotor. The radial profile outline of rotor 100 is shown in solid line and the profile outline of conventional rotor 104 is shown in dashed line.

As illustrated in the Figures, conventional rotor 104 has a circular radial profile while the driven rotor 100 constructed in accordance with the present invention has a radial profile which is non-circular with three repeated lobes (it should be noted that, for clarity, the magnitude of the non-circularity of the profile has been exaggerated in the Figures). Specifically, the profile of the first lobe, from the tooth numbered 1 to the tooth numbered 13, is repeated for a second lobe from the tooth numbered 13 to the tooth numbered 25 and for a third lobe from the tooth numbered 25 to the tooth numbered 1.

The profile of the first lobe has a "high" point at each end (at tooth 1 and at tooth 13) where the profile is radially above/outside the profile of circular conventional rotor 104 and has a "low" point at it's mid point (at tooth 7) where the profile is radially below/inside the profile of circular conventional rotor 104. Each of the repeated second and third lobes have the same high points at corresponding locations, specifically at teeth 13 and 25 for the second lobe and at teeth 25 and 1 for the third lobe, and have the same low point at corresponding locations, specifically at tooth 13 for the second lobe and at tooth 31 for the third lobe.

Rotor 100 can be designed in accordance with the principles described in the above-mentioned published PCT application WO 2003/046413 and in accordance with PCT 2005/026583. By utilizing rotor 100 at a camshaft, the corrective torque created by the non-circular profile of rotor 100 is applied to the chain at a speed one half the speed of the crankshaft, thus allowing 1.5 order resonances (and multiples thereof) to be reduced.

In the synchronous drive 20 of Figure 1 for a V6 engine, it has been found that replacing at least one of the camshaft rotors 28, 32, 36 or 40 with a properly designed driven rotor 100 can reduce 1.5 order torsional vibrations in the synchronous drive 20.

In the synchronous drive 20a of Figure 2 for a V6 engine, it has been found that by replacing at least one of camshaft rotors 28a and 36a and one of camshaft rotors 32a and 40a can reduce 1.5 order torsional vibrations in the synchronous drive 20a.

However, it is further preferred that each camshaft rotor in synchronous drives 20 and 20a be replaced with appropriately designed rotors 100 to obtain a further reduction in 1.5 order torsional vibrations in the respective synchronous drives.

It is believed that the application of the corrective torque, which results from the non-circular profile of rotor 100, at the point wherein the torque causing the torsional vibration is produced provides the best correction, and thus reduction, of 1.5 order torsional vibrations. Thus, replacing each conventional rotor with an appropriately designed rotor 100 in accordance with the present invention is preferred.

Accordingly, in drive 20 of Figure 1, each of camshaft rotors 28, 32, 36 and 40 are preferably each replaced with appropriate rotors 100 and in drive 20a of Figure 2, each of camshaft rotors 28a, 32a, 36a and 40a are preferably each replaced with appropriate rotors 100.

As will be apparent to those of skill in the art, in designing rotor 100 for synchronous drives wherein multiple rotors 100 are to be employed as camshaft rotors, the design of each rotor 100 is performed for the span immediately preceding it. In other words, in a DOHC engine such as Figure 1, the profile for rotor 40 will be designed in view of the span from crankshaft 24 to rotor 40 while the profile for rotor 32 will be designed in view of the span from rotor 32 to rotor 40 and thus the two profiles will differ.

It should also be noted that the present invention is not limited to use with DOHC engines, and the present invention can also be advantageously employed with V6 engines, or the like, with single cams, whether in overhead cam configurations or in push rod configurations.

While tests of V6 engines employing one or more appropriately designed non-circular rotors 100 show a significant reduction in 1.5 order torsional vibrations, the present inventor has determined that it is also possible to reduce vibrations at multiples of the 1.5 order. Specifically, 3^{rd} order vibrations can be reduced along with the 1.5 order vibrations if the rotor or sprockets are designed to also include an appropriate second profile.

As mentioned above, to reduce 1.5 order vibration rotors 100 are designed with a radial profile having a lobe shape that is repeated three times around the circumference of rotor 100. In order to reduce 3^{rd} order vibration, a second profile, having a lobe shape that is repeated six times around the circumference of rotor 100, is also included. This second, six-lobed, profile is overlaid on the above-mention three-lobed profile to obtain a composite profile. This second profile is determined as discussed in the above-mentioned published PCT application, and serves to create corrective torque to offset the torque causing the 3^{rd} order vibrations.

If the out of round difference (the position about the rotor at which the high and low points of the lobes of each profile must be located) between the profiles is large, the resulting composite profile can appear to have three large and three smaller lobes. If the out of round difference between the profiles is small, the composite profile will appear to have just three lobes, albeit with a different shape that a profile for canceling a single order torsional vibration. The out of round difference between the profiles depends upon the physical specifics of the location and geometry of the components of the synchronous drive.

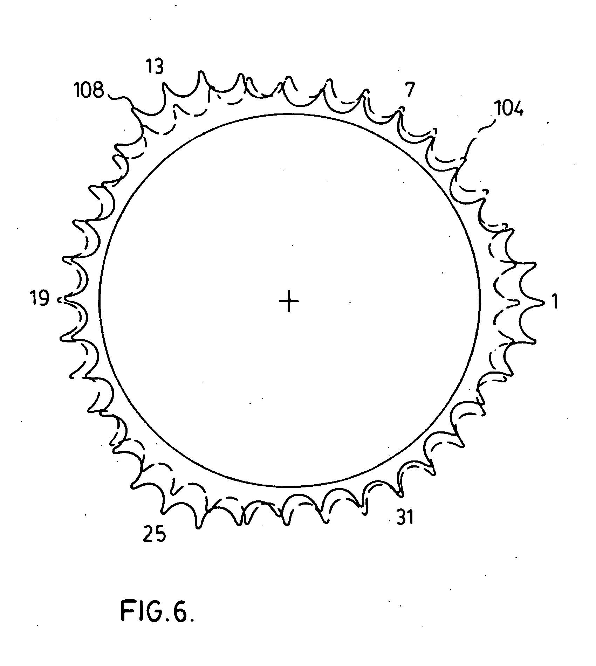

Figure 6 shows the profile of the teeth of a thirty-six tooth rotor 108, shown in solid line, constructed in accordance with the present invention. In the Figure, the inventive rotor 108 is overlaid on the profile of the teeth of a conventional thirty-six tooth rotor 104, shown in dashed line.

As can be seen, the profile of rotor 108 has a general three-lobe shape with three smaller lobes, centered around teeth 7, 19 and 31, located between the three larger lobes that are centered on teeth 1, 13 and 25.

The smaller lobes centered at teeth 7, 19 and 31 correspond to three lobes of the six lobed profile to reduce 3^{rd} order vibrations, and the much different profile of each of the lobes centered at teeth 1, 19 and 25 result from the addition of the three remaining lobes of the profile to reduce 3^{rd} order vibrations with the three lobes of the profile to reduce 1.5 order vibrations. Specifically, in the composite profile of the three large lobes centered about teeth 1, 13 and 25, the two teeth adjacent each side of teeth 1, 13 and 25 respectively (eg. Teeth 11, 12, 14 and 15 about tooth 13, etc.) have a much different profile from those same teeth on rotor 100.

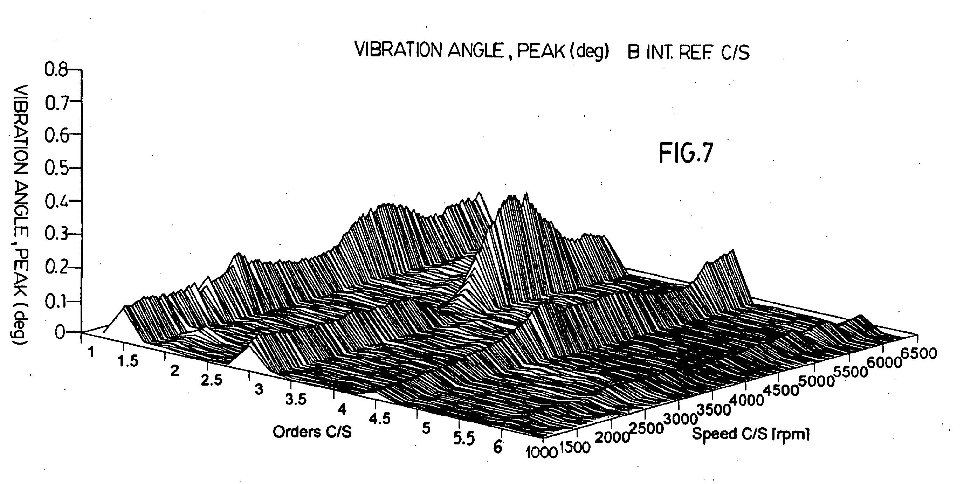

Figure 7 shows the results of employing rotors 108 in the V6 engine tested for Figure 3. The significant reduction in vibrations at the 1.5 order and the 3^{rd} order can clearly be seen in the Figure.

As will be apparent to those of skill in the art, vibrations at higher multiples of the 1.5 order, such as 4.5 order, can also be reduced in a similar manner if rotor 108 is large enough, i.e. has enough teeth, that additional profiles can also be included. To reduce 4.5 order vibrations, a profile with a lobe that is repeated nine times is required to be overlaid with the three-lobed and six-lobed profiles to form the required composite non-circular profile. In most internal combustion engines, rotors in synchronous drives typically do not have enough teeth to allow formation of such a set of profiles, but if such a rotor is large enough, the present invention can be employed therewith to reduce higher multiple vibrations.

## Claims

1. A synchronous drive (20) having a driving rotor (24) and at least driven rotor (36, 40) connected by a continuous-loop elongate drive structure (52, 56) and wherein the driven rotor (36, 40) rotates at one half the speed of the driving rotor, the drive comprising:
a continuous-loop elongate drive structure (52, 56);
a first driven rotor (40) operable to engage the elongate drive structure and be rotated thereby, the driven rotor (40) having a three-lobed non-circular radial profile (100);
a driving rotor (24, 60) operable to drive the elongate drive structure, wherein the three-lobed non-circular radial profile (100) of the first driven rotor is selected to produce a corrective torque to reduce 1.5 order vibrations in the synchronous drive, and of a second driven rotor (32) operable to engage the elongate drive structure, said second driven rotor having a three-lobed non-circular radial profile selected to produce a corrective torque to reduce 1.5 order vibrations in the synchronous drive, **characterized in that**
the second driven rotor (32) has a magnitude of eccentricity that is less than the magnitude of eccentricity of the first driven rotor (40).

2. The synchronous drive of claim 1 wherein the continuous-loop elongate drive (52, 56) structure is a chain.

3. The synchronous drive of claim 1 wherein the continuous-loop elongate drive structure is a toothed belt.

4. The synchronous drive of one of claims 1 to 3 wherein the three-lobed non-circular profiles (108) of the two rotors are overlaid with a further second profile respectively, having six lobes to form a composite non-circular profile for the rotor, the composite profiles being selected to produce corrective torques to reduce 1.5 order and 3^{rd} vibrations in the synchronous drive.

## Patentansprüche

1. Synchronantrieb (20), der einen antreibenden Rotor (24) und wenigstens einen angetriebenen Rotor (36, 40) hat, die durch eine längliche Endlosband-Antriebsstruktur (52, 56) verbunden sind, wobei sich der angetriebene Rotor (36, 40) mit der Hälfte der Geschwindigkeit des antreibenden Rotors dreht und der Antrieb umfasst:
eine längliche Endlosband-Antriebsstruktur (52, 56);
einen ersten angetriebenen Rotor (40), der in Funktion mit der länglichen Antriebsstruktur in Eingriff kommen und von ihr gedreht werden kann, wobei der angetriebene Rotor (40) ein nicht kreisförmiges radiales Profil (100) mit drei Nocken hat;
einen antreibenden Rotor (24, 60), der in Funktion die längliche Antriebsstruktur antreiben kann, wobei das nicht kreisförmige radiale Profil (100) mit drei Nocken des ersten angetriebenen Rotors so ausgewählt wird, dass ein korrigierendes Drehmoment erzeugt wird, um Vibrationen 1,5-ter Ordnung in dem Synchronantrieb zu verringern, und
einen zweiten angetriebenen Rotor (32), der in Funktion mit der länglichen Antriebsstruktur in Eingriff kommen kann, wobei der zweite angetriebene Rotor ein nicht kreisförmiges radiales Profil mit drei Nocken hat, das so ausgewählt wird, dass ein korrigierendes Drehmoment erzeugt wird, um Vibrationen 1,5-ter Ordnung in dem Synchronantrieb zu verringern, **dadurch gekennzeichnet, dass**
der zweite angetriebene Rotor (32) ein Maß an Exzentrizität aufweist, das geringer ist als das Maß an Exzentrizität des ersten angetriebenen Rotors (40).

2. Synchronantrieb nach Anspruch 1, wobei die längliche Endlosband-Antriebsstruktur (52, 56) eine Kette ist.

3. Synchronantrieb nach Anspruch 1, wobei die längliche Endlosband-Antriebsstruktur ein Zahnriemen ist.

4. Synchronantrieb nach einem der Ansprüche 1 bis 3, wobei die dreiflügligen, nicht kreisförmigen Profile (108) mit drei Nocken der beiden Rotoren jeweils von einem weiteren zweiten Profil überdeckt werden, das sechs Nocken hat, so dass ein zusammengesetztes nicht kreisförmiges Profil für den Rotor gebildet wird, und die zusammengesetzten Profile so ausgewählt werden, dass korrigierende Drehmomente erzeugt werden, um Vibrationen 1,5-ter Ordnung und dritter Ordnung in dem Synchronantrieb zu verringern.

## Revendications

1. Entraînement synchrone (20) comportant un rotor d'entraînement (24) et au moins un rotor entraîné (36, 40) reliés par une structure d'entraînement allongée en boucle continue (52, 56) et dans lequel le rotor entraîné (36, 40) tourne à la moitié de la vitesse du rotor d'entraînement, l'entraînement comprenant :
une structure d'entraînement allongée en boucle continue (52, 56) ;
un premier rotor entraîné (40) pouvant être actionné pour mettre en prise la structure d'entraînement allongée et être tourné par cette dernière, le rotor entraîné (40) présentant un profil radial non circulaire à trois lobes (100) ;
un rotor d'entraînement (24, 60) pouvant être actionné pour entraîner la structure d'entraînement allongée, dans lequel le profil radial non circulaire à trois lobes (100) du premier rotor entraîné est choisi pour produire un couple correctif pour réduire les vibrations d'ordre 1,5 dans l'entraînement synchrone, et
un second rotor entraîné (36) pouvant être actionné pour mettre en prise la structure d'entraînement allongée, ledit second rotor entraîné présentant un profil radial non circulaire à trois lobes choisi pour produire un couple correctif pour réduire les vibrations d'ordre 1,5 dans l'entraînement synchrone, **caractérisé en ce que** le second rotor entraîné (36) présente une amplitude d'excentricité qui est inférieure à l'amplitude d'excentricité du premier rotor entraîné (40).

2. Entraînement synchrone selon la revendication 1, dans lequel la structure d'entraînement allongée en boucle continue (52, 56) est une chaîne.

3. Entraînement synchrone selon la revendication 1, dans lequel la structure d'entraînement allongée en boucle continue est une courroie crantée.

4. Entraînement synchrone selon l'une des revendications 1 à 3, dans lequel les profils non circulaires à trois lobes (108) des deux rotors sont respectivement recouverts par un second profil supplémentaire comportant six lobes pour former un profil non circulaire composite pour le rotor, les profils composites étant choisis pour produire des couples correctifs pour réduire les vibrations d'ordre 1,5 et de 3^{ème} ordre dans l'entraînement synchrone.
